(19) 〔European Patent Office logo〕 Europäisches Patentamt / European Patent Office / Office européen des brevets

(11) **EP 2 943 003 B1**

(12) **EUROPEAN PATENT SPECIFICATION**

(45) Date of publication and mention
of the grant of the patent:
**12.08.2020 Bulletin 2020/33**

(51) Int Cl.:
***H04W 24/02*** (2009.01)

(21) Application number: **14305677.8**

(22) Date of filing: **09.05.2014**

(54) **Small cell base station deployment in cellular networks**

Kleinzelliger Basisstationseinsatz in zellularen Netzwerken

Déploiement de station de base à petites cellules dans des réseaux cellulaires

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**11.11.2015 Bulletin 2015/46**

(73) Proprietor: **Alcatel Lucent
91620 Nozay (FR)**

(72) Inventors:
• **Razavi, Rouzbeh
Dublin, 15 (IE)**
• **Claussen, Holger
Dublin, 15 (IE)**

(74) Representative: **Mills, Julia et al
Script IP Limited
18 Bridge Street
Frome Somerset BA11 1BB (GB)**

(56) References cited:
**EP-A2- 1 748 664        WO-A2-02/15326
GB-A- 2 361 385          US-A1- 2010 296 401
US-A1- 2011 009 105      US-A1- 2011 136 478**

**Description**

FIELD OF THE INVENTION

The present invention relates to the field of wireless communication networks and in particular networks comprising small cells arranged to provide additional local capacity.

BACKGROUND

Wireless communication networks are known and are generally arranged in a cellular system where radio coverage is provided to user equipment, for example, mobile telephones, by geographical area. Those geographical areas of radio coverage are known as cells. A base station is located in each geographical area to provide the required radio coverage. User equipment in the area served by a base station receives information and data from that base station and transmits information and data to that base station. There is an ever increasing demand for wireless multimedia services and this is driving strong growth in wireless data traffic. In order to accommodate this, various strategies such as the use of small cells are being considered.

Small cells have the same or similar capabilities as macro cells but have a much reduced geographical coverage. Such smaller sized cells are sometimes referred to as micro cells, pico cells or femto cells. Deployment of small cells in a wireless communication network can assist a network in relation to handling capacity in high traffic areas, for example, so-called hot spot areas. An ability to offload traffic to a small cell or cells located in a high traffic area of a network may be particularly useful to a network operator.

Although small cells may operate on a dedicated frequency, co-channel operation on the same frequency as an existing macrocellular network is generally preferable despite the challenges. With co-channel operation a small cell can add capacity to a macrocell but will also add interference and may increase unnecessary handovers, thus the placement of small cells should be carefully controlled. In general it is advantageous if small cells are placed in areas of high traffic and low user mobility.

In this regard operators may not have either the flexibility or the knowledge to locate small cells in the most advantageous positions. The lack of deployment flexibility arises from the fact that small cells require backhaul and power supply and these may only be available in limited locations. The lack of knowledge is due to a lack of accurate traffic map for most networks.

It would be desirable to be able to improve the performance of cellular networks using small cells without being unduly constrained by their deployment location.

US2011/0009105 discloses a self-organising femtocell/picocell network which allows networks whose deployment may not be carefully controlled the ability to RF engineer the network from a remote site. In this regard, performance data such as SINR, packet or bit error rate, channel state information or throughput for a pilot signal measured at one or more mobile units or base stations, may be collected and the antenna beam patterns altered accordingly.

US2011/0136478 discloses a method of modifying communication parameters of a wireless network, having at least two antennas each providing radio coverage in a sector, by obtaining measurement data for the at least two sectors and where it is below a target value, modifying communication parameters, which may include antenna beam patterns.

US2010/0296401 discloses a hybrid network which controls the radiation pattern from access points or femtocells to direct it towards UEs and to null the pattern in other directions in order to improve SNR and/or to balance UE traffic among the various femtocells and/or APs.

EP1748664 discloses a wireless control apparatus that forms and controls an area of a base station according to an antenna pattern to reduce frequency interference between a current cell and a neighbouring cell.

GB2361385 discloses a cellular network having a plurality of cells, whereby the concentration of mobile users within each cell is measured and the radiation/reception patterns of at least one antenna is changed in response to the concentration.

SUMMARY

A first aspect of the present invention provides a method of improving a performance of a cellular network, said cellular network comprising a small cell base station providing radio coverage within a small cell, said small cell base station comprising at least one antenna operable to provide radio coverage in one of a plurality of antenna patterns, said method comprising:

> an exploration stage comprising measuring at least one indication of a performance of said small cell for at least some of said plurality of antenna patterns, said indication of said performance of said small cell comprises at least one of: traffic offload, and user equipment mobility;

>> wherein measuring traffic offload for each of said at least some of said plurality of antenna patterns is performed by periodically switching between said at least some of said plurality of antenna patterns and determining for each of said antenna patterns at least one of: (i) the proportion of time during which said antenna pattern was selected that said small cell was active; and (ii) at least one of uplink and downlink normalised traffic volume for each of said antenna patterns;

and wherein determining said mobility of user equipment is performed by determining a number of transient sessions, in which a timing between an inbound and outbound handover request for a user equipment is less than a predetermined time, for each of said at least some of said plurality of antenna patterns;

and an exploitation stage comprising selecting one of said plurality of antenna patterns in dependence on said measured at least one indication of small cell performance and providing said small cell radio coverage using said at least one antenna configured to generate said selected antenna pattern, wherein said cellular network comprises a macrocell base station providing radio coverage within a macrocell, said small cell lying within said macrocell.

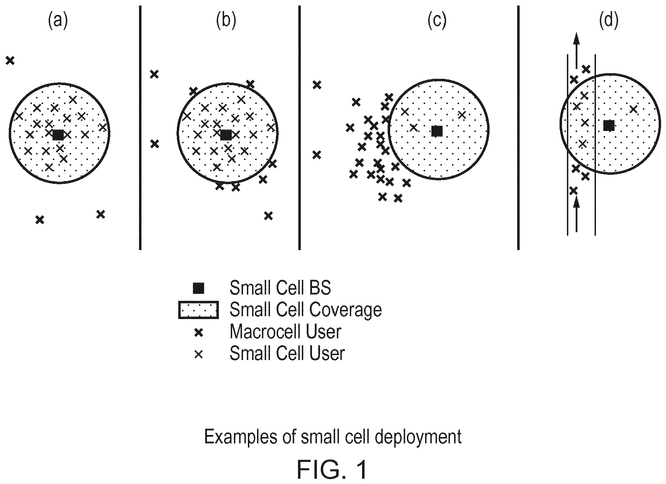

As noted previously small cell deployment in particular for co-channel operation is challenging. The location and placement of small cell base-stations plays a key role in the overall performance of the network. In general, if the offloading gain from a small cell base-station is less significant than its interference impact, the said small cell base-station can be considered as a burden to the network. Consider the three scenarios shown in Figure 1, where a small cell is deployed on the same carrier as the underlying macrocell. Figure 1(a), shows the ideal case where the small cell can offload large number of users without imposing significant interference to macrocell users. The case shown in Figure 1(b) is less ideal but it is still acceptable. Here, although there are a number of macrocell users at the edge of the small cell which may be affected by the interference from the small cell, the offloading gain of the small cell is still significant. The improper placement of the small cell in Figure 1(c), results in many macrocell users being affected by small cell interference while only very few users are captured. Placement of the small cell in Figure 1(d) leads to increased undesirable handover and mobility events and potential call drops.

These issues are addressed in the first aspect of the present invention by the use of at least one antenna configured to provide antenna patterns that can be used to control the area of coverage of the small cell. In effect it is recognised that although the location of the small cell base station maybe constrained its region of radio coverage can be varied by the use of an antenna that can provide different antenna patterns. The antenna or radiation pattern of an antenna refers to the directional or angular dependence of the strength of the radio waves or radio signals emitted from the antenna. In effect the antenna pattern provides a geographical region into which such waves are emitted with a certain field strength or up to a certain power loss and a corresponding region in which such radio signals can be effectively received.

An exploration stage is used to determine the effect of the antenna pattern on performance, and this allows an antenna pattern that provides an improved performance to be selected. In this regard at least one indication of performance is measured for each antenna pattern, the indication of performance being at least one of, traffic offload to the small cell, or the mobility of users in the area of small cell coverage.

In this way an effective yet simple and practical solution to the problem of non-optimal small cell deployment is provided. The proposed method uses the flexibility of different antenna patterns at small cell base-stations to improve the flexibility of small cell deployment by enhancing performance and mitigating for sub-optimal small cell placement.

Indications of performance of the small cell within the cellular network are measured for the different antenna patterns to determine which antenna pattern provides an improved performance. The indications of performance are at least one of offload, that is how many user equipment connect to the small cell base station, mobility, that is an indication of how fast a user moves through the small cell, small cells not providing suitable coverage for mobile users due to their small size. In some embodiments, impact which arises due to neighbouring and/or underlying cells which the signals from the small cell base station may interfere with may also be used as an indication of performance.

It should be appreciated that where there is an underlying macrocell, the performance of this cell in the cellular network will be affected by the placement of the small cell and the selection of a suitable antenna pattern to in effect move the radio coverage of the small cell and thereby mitigate for any non-optimal locating of this cell can improve performance and reduce any burden that the misplacing of the small cell may place on the system.

Where at least one of the indications of performance of the small cell is traffic offload, then this can be measured by determining for the proportion of time during which the antenna pattern was selected whether the small cell was active, that is whether it had user equipment connected to it and/or the amount of normalised traffic volume for at least one of the uplink and the downlink channels. In this way, the antenna pattern that provided the most communications with user equipment or had the most user equipment connected to it can be determined and this will be an indication of the antenna pattern that produced the greatest traffic offload that is the highest number of user equipment attaching to the small cell.

In some embodiments, said exploration stage comprises estimating said interference impact for each of said at least some of said plurality of antenna patterns by at least one of: measuring detected energy on uplink frequencies; increasing cell extension bias and determining a number of additional users that this generates; and receiving information on pilot powers from neighbouring cells.

Where the indication of performance is or includes the interference impact of the antenna pattern, then this can be determined in a number of ways. In some cases it can be determined by detecting the energy on the uplink frequencies of user equipment in the area. In this regard, communications from user equipment to underlying or neighbouring cells may be detected at the small cell and the energy of these communications may be an indication of how close the user equipment is to the small cell and thus, an indication of the interference impact of that small cell on the user equipment. It should be noted that this is not a terribly accurate way of estimating interference impact as the uplink power used by user equipment changes with their distance from the macrocell, such that where a user equipment is using a higher power uplink signal, then it may appear to be closer to the small cell and be judged to have a higher interference impact than is actually the case.

An alternative and/or additional way of estimating interference impact the cell extension bias of the small cell may be increased and the number of additional users that this generates determined. Small cells have a low power transmitter as they only cover a small geographical region and in order to increase a number of user equipment that connect to the small cell, an extension bias may be used such that a user equipment selects the small cell even if the s power detected in the pilot signal of the small cell is lower than the macrocell. Increasing this cell extension bias and determining the number of additional users this causes to connect to the small cell provides an indication of how many user equipment are close to the edge of the small cell, those close to the edge becoming the additional users. This in turn is an indication of the interference impact that a particular antenna pattern has.

An alternative way of estimating the interference impact would be to do so cooperatively with other base stations, such that information is received from neighbouring cells on the pilot powers of user equipment in their locations. This is an accurate way of determining interference impact but requires cooperation from neighbouring cells. It should be noted that neighbouring cells may be those that are adjacent to the small cells or those that cover the same area and underlie the small cell.

Where the indication of performance is mobility of the user equipment within the small cell, then this may be determined by determining how many transient sessions occur within a predetermined time for each of the plurality of antenna patterns. Small cells only provide a geographically limited coverage and therefore mobile users will transition through these small cells in a short time and thus, it is not advantageous if they are offloaded to the small cell as the overhead of the handover will not be worth the amount of time that they are actually connected to the small cell. Thus, where a small cell is located in an area of many highly mobile users it can be a burden to the network rather than improving it. Thus, the mobility of the user equipment is also a measure of performance of the small cell base station and the network.

In some embodiments, said exploration stage further comprises measuring at least two of said indications of said performance of said small cell and combining said at least two indications to generate a performance indication function and using said performance indication function to select a preferred antenna pattern for use in said exploitation stage.

As noted previously, there are various indications of performance that can be measured. In some cases, more than one of them is measured and the measurements are combined to generate a performance indication function and it is that this is used to select the preferred antenna pattern. In this regard, some of the indications such as traffic offload are positive indications of performance and the higher they are the better the performance, whereas others such as mobility and interference impact have a negative impact on performance. Thus, when combining some or all of these indications to generate a performance indication function, they should be weighted depending on their importance and added or subtracted from each other depending on whether they improve or detract from performance.

In some embodiments, said exploration stage is completed when it has been performed for at least one of: a predetermined time and a predetermined number of measurements, said exploitation stage being performed when said exploration stage has completed.

The exploration stage should be performed for a reasonable length of time such that a statistically significant set of measurements is received allowing a suitable antenna pattern that provides the required coverage area to be selected. In effect, this method selects an antenna pattern for use over a significant period of time and thus, the exploration stage should be performed for long enough to remove, or at least reduce statistical variations that occur due to perhaps temporary high loading of the system or particular random or pseudo random events. Therefore, the exploration stage is performed for a predetermined length of time or until a certain number of measurements have been taken. This predetermined time or the number of measurements may be selected to ensure a statistically significant sample is achieved.

In some embodiments, the method comprises during said exploitation stage, continually measuring at least one indication of performance of said small cell and in response to said indication indicating that said performance of said small cell has fallen below a predetermined level, selecting a different antenna pattern from said at least some of said plurality of antenna patterns in dependence upon said measured small cell performance.

Although the exploration stage may be performed initially and then the exploitation phase performed continuously, in some cases the exploration phase may be performed again either periodically or in response to detecting a drop in performance. In this regard, some of the performance indications may be continually measured and where it is found that the performance has fallen below a certain level, then a different antenna pattern may be selected. This predetermined level may be set as a difference between the preferred antenna pattern and the next best antenna pattern with some additional threshold. In this way, when the performance seems to have fallen below what would have been the performance of the second preferred antenna pattern then this may be a good indication to switch to this antenna pattern as the traffic may have changed and that antenna pattern may itself be the preferred one.

In some embodiments, said step of measuring said performance of said small cell comprises, associating said measurements of said small cell performance with a time period in which said measurement was made, and when one of said plurality of antenna patterns provides an improved small cell performance during a first time period and a further antenna pattern provides an improved small cell performance during a second time period, said exploitation stage comprises selecting said one antenna period for said first time period and said further antenna period for said second time period.

In some cases, rather than finding one preferred antenna pattern, the performance of the small cell may be measured with respect to time and where it is found that performance varies significantly with time, then one preferred antenna pattern may be selected for one time period perhaps the time period that falls during the working day, while another antenna pattern may be selected for a different time period perhaps the time period during the evening and perhaps the night.

Allowing antenna patterns to be selected with respect to time periods recognises that for some environments traffic will change considerably during the course of 24 hours and antenna patterns that are advantageous for one time period may not be the same as those that are advantageous for another.

In some embodiments, said at least one antenna comprises one of: a multiple element antenna, different antenna patterns being formed by different elements of said multiple element antenna being active; and an antenna array with a switched feeder network.

In order to generate different antenna patterns, the antenna of the small cell base station maybe a single antenna with multiple elements which can be selectively connected to the input feed line such that different single elements or in some cases combinations of elements are active, while in other embodiments it may be an array of antennas which have a switched feeder network such that different ones of the antennas are fed at different times.

The generation of different antenna patterns using antennas formed in this way allows the use of simple transceivers with only one transmit/receive chain when compared to traditional beamforming approaches, it also does not require any additional user equipment UE feedback allowing the system to function with legacy user equipment. Since only one transceiver chain is required embodiments are very cost efficient, and can be easily integrated into existing small cell products (which have one transceiver chain). Furthermore it is fully compliant with existing standards and mobiles.

In some embodiments, said antenna comprises a multiple element antenna and said at least some of said plurality of antenna patterns of said exploration stage comprise antenna patterns generated by each of said elements of said multiple element antenna acting as a single element antenna.

With multiple element antennas, each element may be selected individually and may generate its own radiation pattern. Such an antenna will generate a directional beam. Selecting more than one antenna element will provide a less directional coverage while selecting all elements will generate a radiation pattern similar to that generated by an omni-directional antenna.

In some embodiments, said exploration stage further comprises determining at least one indication of small cell performance for an antenna pattern generated by at least two of said multiple elements of said antenna; wherein said step of determining said at least one indication of small cell performance for an antenna pattern generated by at least two of said multiple elements of said antenna, comprises one of: estimating said at least one indication from said measured at least one indication for antenna patterns generated by said at least two of said multiple elements acting as single antenna elements; and measuring said at least one indication of said performance of said small cell for said antenna patterns generated by at least two of said multiple elements of said antenna.

In addition to considering antenna patterns generated by single elements of the multiple antenna elements, additional antenna patterns generated by multiple elements may be considered. In this regard, the small cell performance for the antenna patterns of these multiple elements may be estimated from the performance indications of the individual elements or from additional measuring steps during the exploration stage during which multiple elements are fed with the input signal.

A second aspect of the present invention provides a computer programme which when executed by a computer is operable to control the computer to perform steps in a method according to a first aspect of the present invention.

A third aspect of the present invention provides a small cell base station configured to provide radio coverage within a small cell, said small cell being located within an underlying macrocell, said small cell base station comprising:

at least one antenna operable to provide radio coverage in one of a plurality of antenna patterns;
control circuitry operable to control said at least one antenna during an exploration stage to generate at least some of said plurality of antenna patterns for a predetermined time;
measurement circuitry operable to measure at least one indication of a performance of said small cell for said at least some of said plurality of antenna patterns said indication of said performance of said small cell comprising at least one of: traffic offload, and user equipment mobility; and

selection circuitry for selecting one of said plurality of antenna patterns in dependence on said measured at least one indication of small cell performance; said small cell base station being operable to generate said selected antenna pattern during an exploitation stage;

wherein the measurement circuitry is operable to:

measure traffic offload for each of said at least some of said plurality of antenna patterns by periodically switching between said at least some of said plurality of antenna patterns and determining for each of said antenna patterns at least one of: (i) the proportion of time during which said antenna pattern was selected that said small cell was active; and (ii) at least one of uplink and downlink normalised traffic volume for each of said antenna patterns;

and determine said mobility of user equipment by determining a number of transient sessions, in which a timing between an inbound and outbound handover request for a user equipment is less than a predetermined time, for each of said at least some of said plurality of antenna patterns.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

BRIEF DESCRIPTION OF THE DRAWINGS

Embodiments of the present invention will now be described further, with reference to the accompanying drawings, in which:

Figure 1 illustrates examples of small cell deployments;

Figure 2 illustrates two examples of switched multi-element antenna systems;

Figure 3 shows antenna patterns for the multi-element antenna systems of Figure 2;

Figure 4 shows an example of antenna switching by the small cell base-station where a total of 4 antenna patterns are considered to be available;

Figure 5 illustrates a simple example where applying a directional pattern resulted in capturing a user while additional inference is created for larger number of users;

Figure 6 shows schematically the difference in the Manhattan population distribution during the day and night time;

Figures 7a and 7b show the fitness functions and averaged fitness functions for four antennas;

Figure 8 shows a small cell base station according to an embodiment of the present invention;

Figure 9 shows a flow diagram illustrating steps in a method according to an embodiment of the present invention;

Figure 10 shows the 90% confidence interval of A as a function of hours of observation;

Figure 11a shows effective coverage radius of small cells versus distance to the underlying macrocell BS;

Figure 11b shows the asymmetric coverage area of small cells; and

Figure 11c shows the extension of small cell coverage using multi-element antennas.

DESCRIPTION OF THE EMBODIMENTS

Before discussing the embodiments in any more detail, first an overview will be provided.

In order to compensate for sub-optimal small cell deployment and thereby allow greater flexibility in locating such cells, an antenna arrangement is provided that can generate different antenna patterns and these can be used to control coverage such that an antenna pattern that best serves the traffic distribution can be selected. This may be determined by obtaining metrics for any or all of offload, interference and mobility and selecting the preferred pattern based on these metrics.

In effect the antenna pattern flexibility is exploited using a new distributed self-optimization method that selects the optimal or preferred antenna pattern based on one or a combination of the following criteria:

1) Maximizing or at least increasing traffic offload gain (users' capture rate)

2) Minimizing or at least reducing interference impact on existing macrocell users

3) Minimizing or at least reducing undesirable mobility events and signaling overhead

In this way a low cost, standards compliant solution for compensating for a sub-optimal small cell deployment location by selecting one of different possible antenna patterns which serves best the traffic distribution, including obtaining metrics for any of offload, interference and mobility, and jointly optimizing the pattern based on the selected observed statistics, is provided .

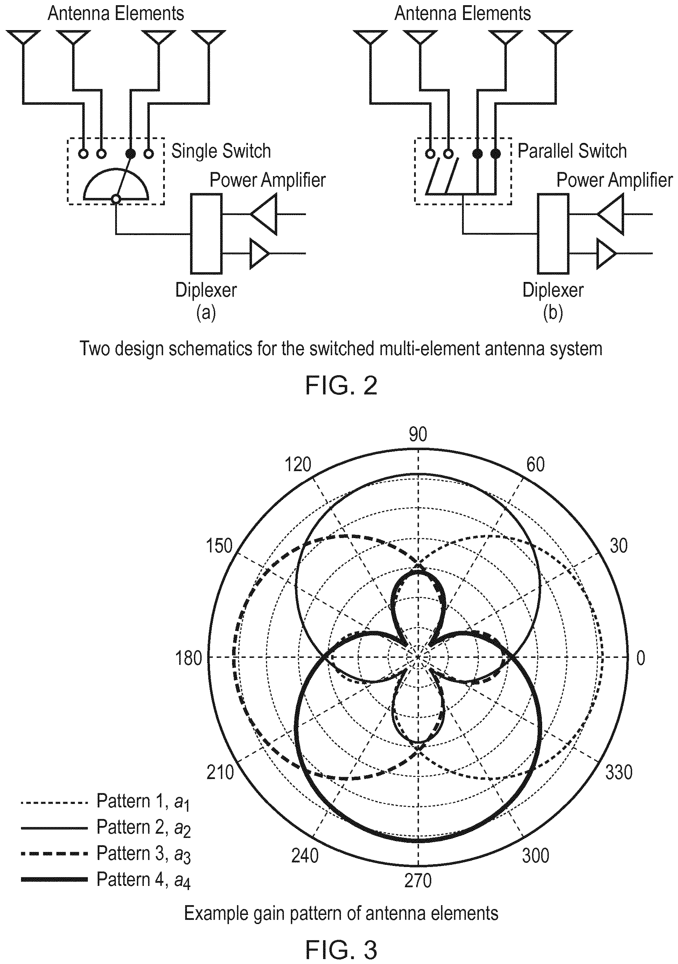

Figure 2 shows two design schematics for a switched multi-element antenna system, while figure 3 shows the effective antenna gain pattern when using such multiple element antenna.

With an Omni-Directional Antenna (ODA), the only way a base-station can interact with its environment is through power adjustment. However, where a base-station is equipped with multiple antenna elements with distinctive directional gain pattern as is shown in Figure 2 beam directionality can be achieved while keeping the complexity and cost low. A switch can be used to select a single or a combination of antenna elements, which in their simplest form may be realised using a number of patch antennas.

The following sections explain how the base-station selects the appropriate antenna element based on the three criteria mentioned earlier.

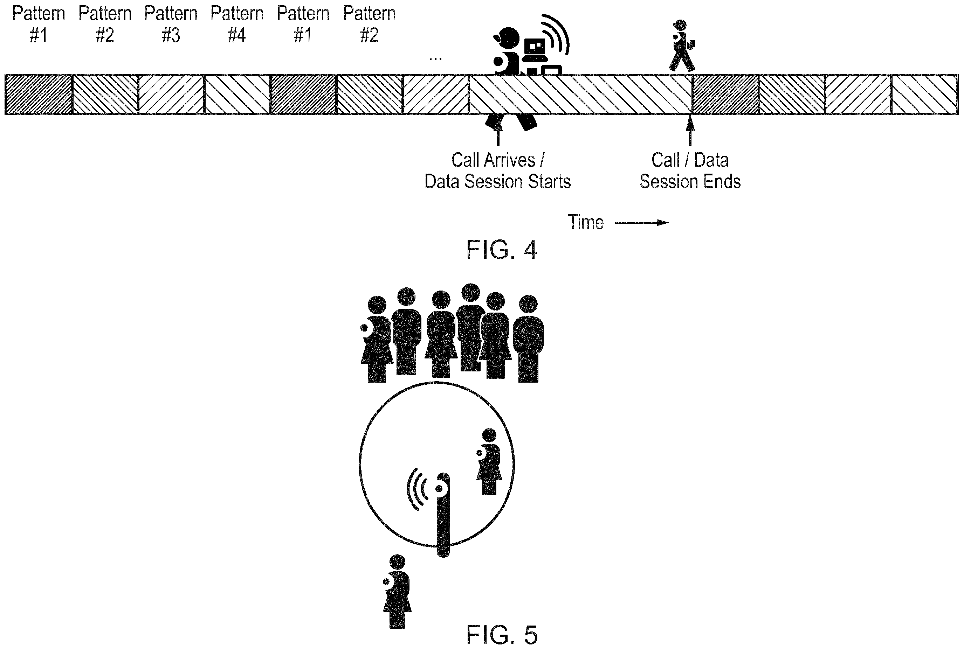

**A) Traffic Offload Gain:** The small cell base-station evaluates the traffic offload gain associated with each antenna patterns. Preferably, the base-station selects an antenna pattern for coverage purposes that maximises the users' capture rate/ traffic offload. However, it should be noted that due to its limited coverage, the base-station may be idle for much of the time. To evaluate the traffic offload gain, the time can be divided into small windows (e.g. each few minutes long) and unless the base-station captures a user, it can switch to a new antenna pattern once the current time window has elapsed. If a user arrives, the base-station does not change the antenna pattern for the duration of the call/ data session. This avoids or at least reduces call drops as a result of abrupt change of the coverage. Figure 4 shows an example of antenna switching by the small cell base-station where a total of 4 antenna patterns are considered to be available. The base-station records the sum of the total active time associated with each antenna pattern as well as the overall time the base-station was using that antenna pattern. The ratio of these two quantities can be used as a metric to evaluate the offloading gain of a given antenna pattern. Other alternative quantises such as total traffic volume (uplink + downlink), normalised by the total time of using the antenna pattern could alternatively be used.

While traffic offload gain is an important metric, it is clearly not the only criterion to decide the optimal antenna pattern as interference and mobility are additionally key parameters. Figure 5 illustrates a simple example where applying a directional pattern resulted in capturing a user while additional inference is created for larger number of users. Such scenarios are indeed quite possible due to the shape of most hotspots.

**B) Reducing Interference:** The main challenge with this objective is that a base-station may not be able to directly evaluate its own interference effect on users of other cells. We consider three ways for a base-station to quantify its interference impact on other users.

Uplink Sniffing: This is probably the simplest but least accurate way for a base-station to estimates its interference impact on other users. Here, the base-station measures the total detected energy on the uplink frequencies. Since most of the time a cell is idle, the detected power would correspond to users of other cells communicating with their own serving cell. Since the base-station uses this measure merely to compare different antenna patterns, higher detected power implies higher directivity towards other-cells' users' hence higher likelihood of creating interference to those users. However, unfortunately the absolute values of the uplink power cannot be directly interpreted by the base-station since the power used for an uplink signal by user equipment may be dependent on the distance of the users to their serving cell as well as the uplink load level of the serving cell. Moreover, recent studies suggest that data traffic is becoming more and more asymmetrical implying much less uplink activities compared to the downlink.

Increasing of Cell Extension Bias: In this method, the base-station virtually increases its cell size using the range extension bias and observes the corresponding increase in the number of inbound handover requests. Since the cell extension bias may have been set to an unreasonably large value, the base-station might reject some of those handover requests but can use this information to estimate how many users are in the close vicinity of the cell border.

Information exchange with underlying macrocell/ neighbouring small cells: this is the most accurate way for a base-station to estimate its interference impact on users of other cell. As a routine part of their operation, users measure the received pilot power from neighbouring cells. This is a critical procedure especially for triggering handover events. The underlying macro-base-station can simply exchange this information with the small cells. More specifically, the macrocell can define a power threshold and identify the number of users and the ratio of time where the received power from a small cell base-station exceeds this threshold. The macrocell can then send this processed information together with the appropriate time stamps to the small cell base-station. Using the time stamps, the small cell base-station would then be able to derive which antenna pattern created the highest interference to the macrocell users.

**C) Reducing Undesirable Mobility Events and Signalling:** As shown in Figure 1(d), there are a number of scenarios where the small cell coverage may overlap with a walking path. Due to their limited coverage, small cells are generally intended for offloading traffic from static users. Extending the small cell coverage to walking paths may result in significant increase of mobility events and potential call drops. A transient call can be defined if the timing between the inbound handover request and the outbound handover is less than a threshold. The small cell base-station can take into account the number of such transient sessions when deciding the optimal or preferred antenna pattern.

**Selecting the Preferred Antenna Pattern:** Generally speaking, a fitness function comprising performance indicators associated with the above three criterion can be defined. The actual metric used to reflect the performance associated with each criterion could vary. For example, as explained earlier, the offloading gain can be described as the ratio of active time of the cell or as the total traffic volume transferred using each of the available antenna patterns. Additionally, the fitness function may apply different weights to different criterion so as to take into account the operator's priorities. The optimal pattern is simply be the one that can maximise the resulting fitness function.

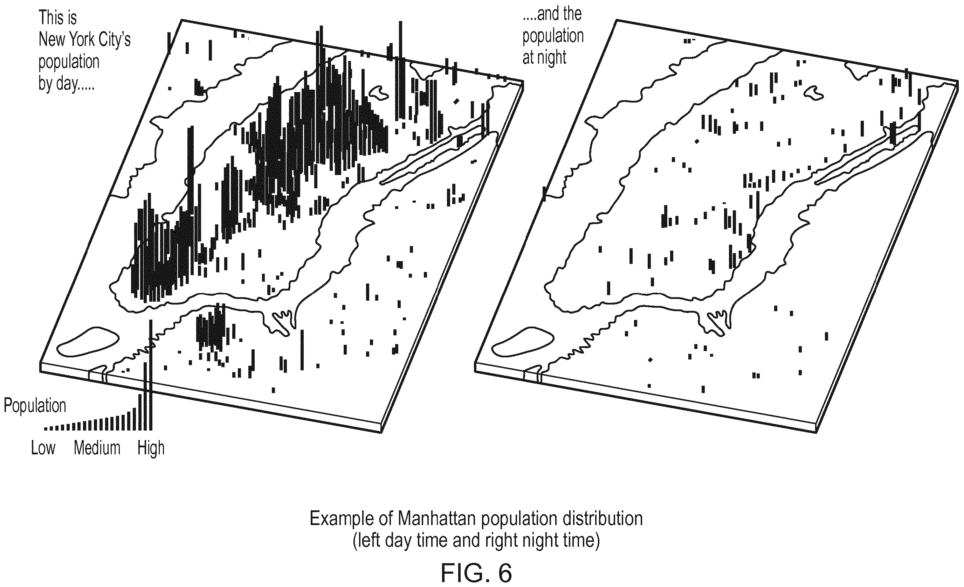

Another interesting feature is the fact that the base-station can divide the time into long-enough intra-day regimes (say each about 4-5 hours) and calculate the optimal antenna pattern for each regime separately. This can be especially useful since the distribution of users may change over the time (e.g. during business or evening hours), hence different antenna patterns might be suitable for different time intervals during the day. Figure 6 shows an example of users' distribution in Manhattan, NY in day and night time.

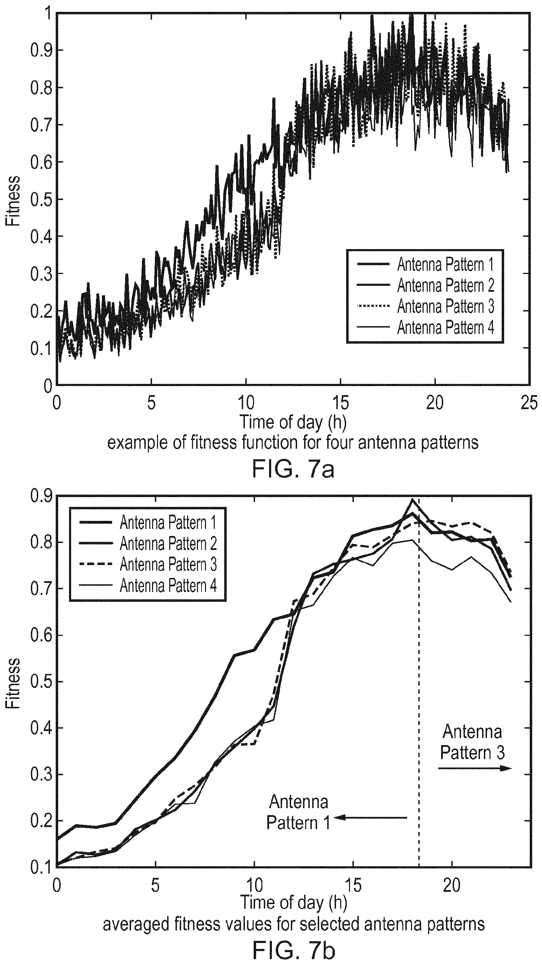

To make the system more stable, first the fitness is averaged over some long enough intervals (e.g. an hour). A new intra-day regime can be then defined only if the averaged fitness performance of a given pattern is higher than the previous maximum by a certain threshold and for a given minimum of a number of intervals. Figure 7(a) shows an example of fitness values associated to four antenna patterns. The averaged fitness is shown in figure 7(b). In this case the base station should select antenna pattern 1 until 18h and then switch to antenna pattern 3 for the rest of the day. Once such optimal antenna patterns are derived based on long enough observation periods, the base-station would stick with them.

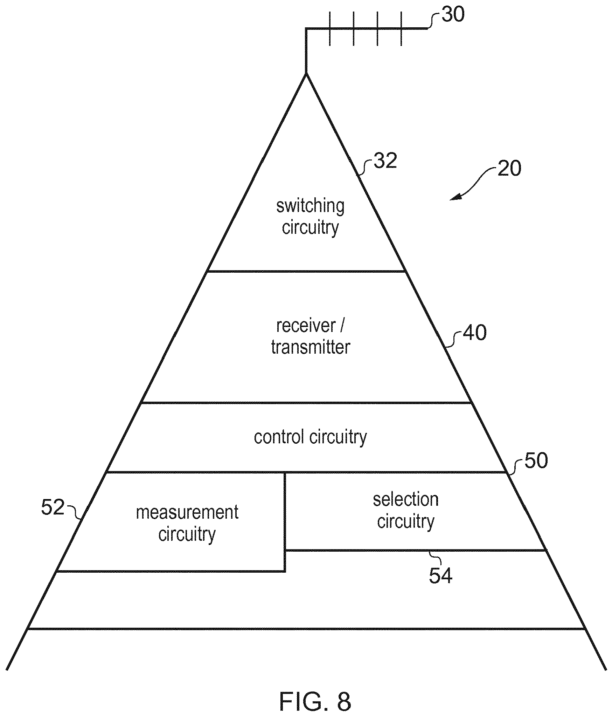

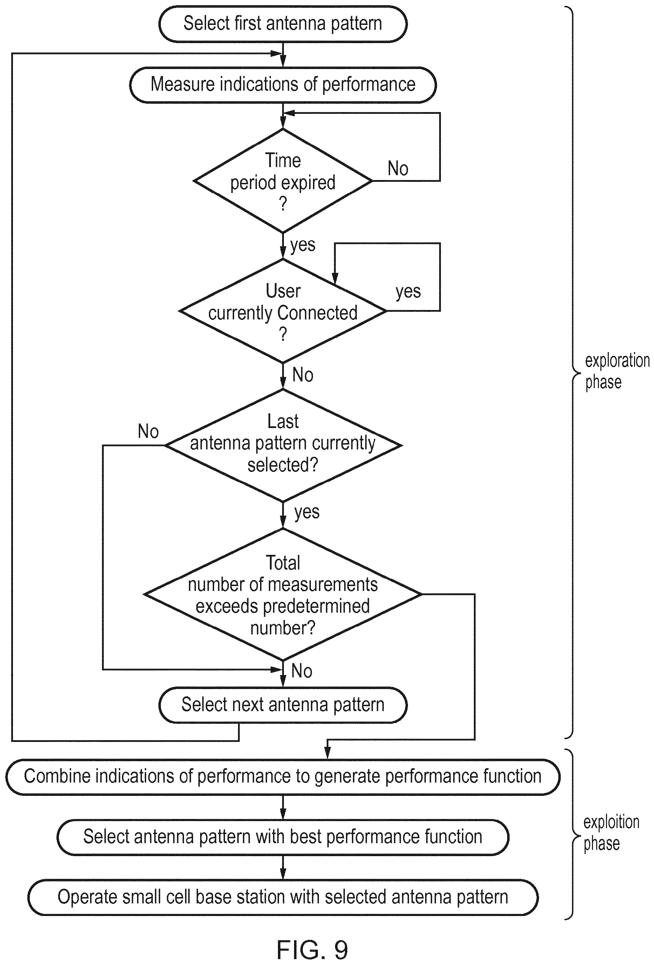

Figure 8 shows a small cell base station 20 according to an embodiment of the present invention. The small cell base station 10 comprises a four element antenna 30 similar to those shown in figure 2 with switching circuitry 32 for selectively feeding the different antenna elements with signals to and from the receiver/ transmitter circuitry 40. There is also control circuitry 50 which controls the switching circuitry and comprises measurement circuitry 52 for measuring performance indicators such as traffic offload values, interference impact and user mobility during an exploration stage during which the control circuitry 52 controls the switching circuitry 32 to periodically switch between antenna elements in a way similar to that shown in figure 4 and selection circuitry 54 which derives a preferred antenna pattern from the measurements taken during the exploration stage, the control circuitry 50 controlling the switching circuitry to use the preferred antenna pattern during an exploitation stage in which the base station 20 serves users. Figure 9 shows a flow diagram illustrating steps in a method according to an embodiment of the present invention. Initially during the exploration phase a first possible antenna pattern is selected and indications of performance are measured during a predetermined time period. When the time period has expired it is determined whether there are any users currently connected and if so this antenna pattern remains selected until this is no longer the case. It is then determined if all of the possible antenna patterns have been selected and if so if the total number of measurements taken exceed a predetermined number. If not all the antenna patterns have been selected or if not enough measurements have been taken then the next antenna pattern is selected. If all the possible antenna patterns have been selected but there have note been enough measurements taken (or in some embodiments not enough time has passed) so that it is thought the results would not be statistically significant then the steps are repeated for all possible antenna patterns again. When enough measurements have been taken then the system moves to the exploitation phase.

During this phase the measured indications of performance for each antenna pattern are combined to generate a performance function, the fitness function of Figure 7 and from this the antenna with the best performance is selected and the small cell base stations operates configured to generate this antenna pattern.

In some embodiments the exploration phase is repeated periodically to ensure that traffic has not changed over time and that the best antenna pattern is being used. Alternatively during operation indication of performance may be taken and if performance drops then either a different antenna pattern maybe selected, or the exploration phase may be repeated.

In the above embodiment the exploration phase was continued until the number of measurements exceeded a predetermined number. As noted above it could also be performed for a predetermined time. Each of these factors being determined to provide a statistically significant sample. In effect determining when to stop collecting measurements and to make a decision with regard to which antenna pattern(s) to select and retain is an important and practical consideration. In some embodiments in order to do this, the algorithm should ensure that the offloading gain of the base-station is estimated with high enough accuracy. This is akin to determining the expected number of users being served when each of the antenna patterns are selected. The calls/ data session arrivals can be modelled as a Poisson process. The base-station then needs to accurately estimate the calls/ data session arrival rate, A, in a time-unit for each antenna pattern. Evidently, $\lambda$ depends on users capture rate and the probability of users' activity (i.e. making/receiving calls or initiating data sessions). Let's consider the following simple notation:

D: Users density (e.g. users/km$^2$)
$P_u$=Probability of users activity in a unit of time
A: Small cell coverage area
M: Number of captured users

Considering this notation, M and $\lambda$ can be written as

$M = D.A$ and $\lambda = M.P_u$.

For a Poisson process, the mean and the variance are both $\lambda$. For calculating the confidence interval around A, the standard error can be calculated as $\sqrt{\dfrac{\lambda}{n}}$ where n is the number of calls/data sessions observed. Subsequently, the 90-percent confidence interval can be written as

$$90\% \; CI = \lambda \pm 1.96 \sqrt{\frac{\lambda}{n}}$$

Therefore, the number of observed calls/ data sessions should be sufficiently high to assure that the 90% CI is small enough. As a simple measure of accuracy, a confidence interval can be said to be small enough if the interval length is smaller than say 20% of the A value (i. e. $\pm 10\%$). That is to say

$$1.64 \sqrt{\frac{\lambda}{n}} = 0.1\lambda \;\; \Rightarrow \; n > \frac{270.60}{\lambda}$$

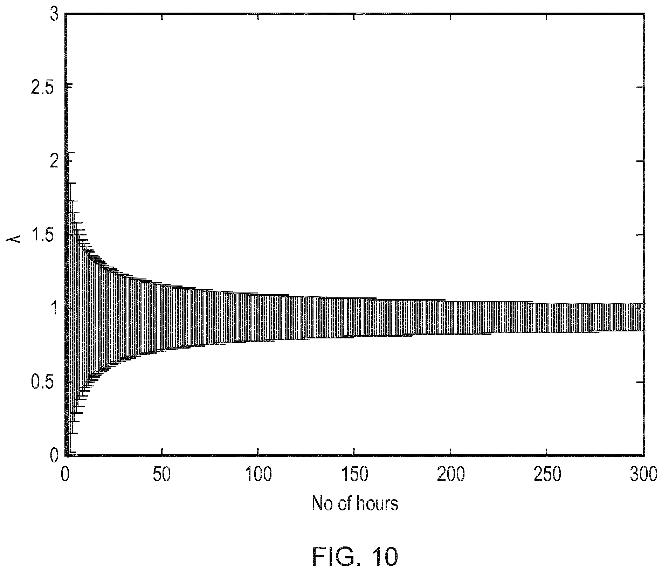

To have a better understanding let us consider an example where
D=8000 users/km$^2$ (Based on urban population density of 6000/ km$^2$, Operator market share of 30% and hotspot factor (to account for increased population density in certain areas) of 4)
A=2000m$^2$ (Effective coverage radius of 25m)
$P_u$= 0.0583 (Based on the stat of the art users activity statistics and considering unit of time = 1 Hour)
$\Rightarrow \lambda$ =0.9328
Figure 10 illustrates the 90% confidence interval for estimation of $\lambda$ as a function of hours of observation.
Interestingly, the above results indicate that the choice of the time-unit does not have any impact on the convergence of the algorithm. In other words the time slots in Figure 4 can be of arbitrary length. It is the overall time that is important
Another feature of an embodiment of the invention is that in some cases the base-station may be able to select a combined antenna pattern without explicitly trying that pattern. As a result of splitting the signal power between individual antenna patterns, a combined pattern may have smaller directional gain. However, the base-station would be able to estimate the fitness or performance function if a combined pattern is selected. This can be realised using the following steps:

1. For each individual pattern, estimate the cell's boundaries in terms of the maximum users' path loss to the base-station when the said individual pattern is selected. The base-station can simply estimate the users path loss by comparing the transmitted and received pilot power at the user location (reported by the user).

2. Depending on the number of antenna patterns combined, the base-station can assume a certain antenna directivity gain or loss when a combined pattern is selected.

3. Using the assumption in step 2, the offloading gain can be revaluated by the base-station. More specifically, the base-station can remove those records corresponding to those users which do not fall into coverage area of the base-station when a combined pattern is selected.

4. Similarly, the effect of undesirable handover events as well as interference to the adjacent users can be re-evaluated using the assumption in step 2.

5. A new fitness function can be estimated according to the outcome of step 4 and 5.

Another advantage of using multi-element antenna system is the fact that the small cell coverage can be extended significantly in some particular directions. This is especially the case when considering co-channel deployments of small cells. In fact the coverage area of small cells would significantly depend on the received pilot power from the underlying macrocell. This is evidently the case since the small cell coverage is defined where the pilot is above that of macrocell (although there might be some range expansion biases applied).

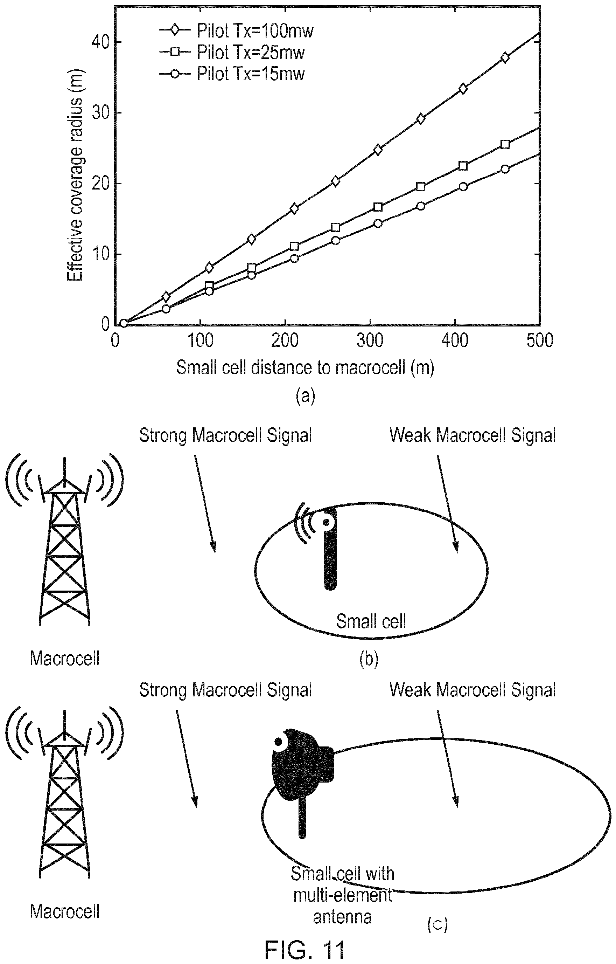

Figure 11a shows the effective coverage radius of the small cell as a function of distance to the underlying macrocell. As a result of this, the coverage area of the small cell is normally asymmetrical (see Figure 11b). Applying the antenna gain pattern to the direction where macrocell signal is weaker can result in significant expansion of the cell coverage area (Figure 11c). Furthermore, it should be noted that offloading macrocell edge users is more critical as they are normally suffering from poor service quality as a result of lower signal SINR.
Although multi-element patch antennas are described above such an antenna could be replaced with an antenna array with a switched feeder network that can create fixed beams in a similar way. In effect it is the ability of the antenna to generate antenna patterns that can change the geographical area of the radio coverage that is important.
A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope as set out in the appended claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Claims

1. A method of improving a performance of a cellular network, said cellular network comprising a small cell base station (20) providing radio coverage within a small cell, said small cell base station (20) comprising at least one antenna (30) operable to provide radio coverage in one of a plurality of antenna patterns, said method comprising:

an exploration stage comprising measuring at least one indication of a performance of said small cell for at least some of said plurality of antenna patterns, said indication of said performance of said small cell comprises at least one of: traffic offload, and user equipment mobility;

wherein measuring traffic offload for each of said at least some of said plurality of antenna patterns is performed by periodically switching between said at least some of said plurality of antenna patterns and determining for each of said antenna patterns at least one of: (i) the proportion of time during which said antenna pattern was selected that said small cell was active; and (ii) at least one of uplink and downlink normalised traffic volume for each of said antenna patterns; and wherein determining said mobility of user equipment is performed by determining a number of transient sessions, in which a timing between an inbound and outbound handover request for a user equipment is less than a predetermined time, for each of said at least some of said plurality of antenna patterns;

and an exploitation stage comprising selecting one of said plurality of antenna patterns in dependence on said measured at least one indication of small cell performance and providing said small cell radio coverage using said at least one antenna configured to generate said selected antenna pattern, wherein said cellular network comprises a macrocell base station providing radio coverage within a macrocell, said small cell lying within said macrocell.

2. A method of improving a performance of a cellular network according to claim 1, wherein said at least one indication of said performance of said small cell further comprises interference impact.

3. A method according to claim 2, wherein said exploration stage comprises estimating said interference impact for each of said at least some of said plurality of antenna patterns by at least one of:

measuring detected energy on uplink frequencies;

increasing cell extension bias and determining a number of additional users that this generates;

receiving information on pilot powers from neighbouring cells.

4. A method according to any preceding claim, wherein said exploration stage further comprises measuring at least two of said indications of said performance of said small cell and combining said at least two indications to generate a performance indication function and using said performance indication function to select a preferred antenna pattern for use in said exploitation stage.

5. A method according to any preceding claim, wherein said exploration stage is completed when it has been performed for at least one of: a predetermined time and a predetermined number of measurements, said exploitation stage being performed when said exploration stage has completed.

6. A method according to any preceding claim, comprising during said exploitation stage, continually measuring at least one indication of performance of said small cell and in response to said indication indicating that said performance of said small cell has fallen below a predetermined level, selecting a different antenna pattern from said at least some of said plurality of antenna patterns in dependence upon said measured small cell performance.

7. A method according to any preceding claim, comprising periodically performing said steps of said exploration stage and performing said exploitation stage using said measured small cell performance from said most recent exploration stage.

8. A method according to any preceding claim, wherein said step of measuring said performance of said small cell comprises, associating said measurements of said small cell performance with a time period in which said measurement was made, and when one of said plurality of antenna patterns provides an improved small cell performance during a first time period and a further antenna pattern provides an improved small cell performance during a second time period, said exploitation stage comprises selecting said one antenna period for said first time period and said further antenna period for said second time period.

9. A method according to any preceding claim, wherein said at least one antenna comprises one of:

a multiple element antenna, different antenna patterns being formed by different elements of said multiple element antenna being active; and an antenna array with a switched feeder network.

10. A method according to claim 9, wherein said antenna comprises a multiple element antenna and said at least some of said plurality of antenna patterns of said exploration stage comprise antenna patterns generated by each of said elements of said multiple element antenna acting as a single element antenna.

11. A method according to claim 10, wherein said exploration stage further comprises determining at least one indication of small cell performance for an antenna pattern generated by at least two of said multiple elements of said antenna; wherein

said step of determining said at least one indication of small cell performance for an antenna pattern generated by at least two of said multiple elements of said antenna, comprises one of:

estimating said at least one indication from said measured at least one indications for antenna patterns generated by said at least two of said multiple elements acting as single antenna elements; and

measuring said at least one indication of said performance of said small cell for said antenna patterns generated by at least two of said multiple elements of said antenna.

12. A computer program which when executed by a computer is operable to control said computer to perform steps in a method according to any one of claims 1 to 11.

13. A small cell base station (20) configured to provide radio coverage within a small cell, said small cell being located within an underlying macrocell, said small cell base station comprising:

at least one antenna (30) operable to provide radio coverage in one of a plurality of antenna patterns;

control circuitry (50) operable to control said at least one antenna during an exploration stage to generate at least some of said plurality of antenna patterns for a predetermined time;

measurement circuitry (52) operable to measure at least one indication of a performance of said small cell for said at least some of said plurality of antenna patterns said indication of said performance of said small cell comprising at least one of: traffic offload, and user equipment mobility; and

selection circuitry (54) for selecting one of said plurality of antenna patterns in dependence on said measured at least one indication of small cell performance;

said small cell base station being operable to generate said selected antenna pattern during an exploitation stage;

wherein the measurement circuitry is operable to:

measure traffic offload for each of said at least some of said plurality of antenna patterns by periodically switching between said at least some of said plurality of antenna patterns and determining for each of said antenna patterns at least one of: (i) the proportion of time during which said antenna pattern was selected that said small cell was active; and (ii) at least one of uplink and downlink normalised traffic volume for each of said antenna patterns;

and determine said mobility of user equipment by determining a number of transient sessions, in which a timing between an inbound and outbound handover request for a user equipment is less than a predetermined time, for each of said at least some of said plurality of antenna patterns.

**Patentansprüche**

1. Verfahren zum Verbessern einer Güte eines zellularen Netzes, wobei das zellulare Netz eine Kleinzellenbasisstation (20), die eine Funkbedeckung innerhalb einer Kleinzelle bereitstellt, umfasst, wobei die Kleinzellenbasisstation (20) mindestens eine Antenne (30), die dazu dient, eine Funkbedeckung in einem aus einer Vielzahl von Antennendiagrammen bereitzustellen, umfasst, wobei das Verfahren Folgendes umfasst:

eine Untersuchungsphase, die Messen mindestens einer Angabe einer Güte der Kleinzelle für mindestens einige der Vielzahl von Antennendiagrammen umfasst, wobei die Angabe der Güte der Kleinzelle Folgendes umfasst: eine Verkehrsumleitung und/oder eine Teilnehmergerätemobilität;

wobei das Messen einer Verkehrsumleitung für jedes der mindestens einigen der Vielzahl von Antennendiagrammen durchgeführt wird, indem periodisch zwischen den mindestens einigen der Vielzahl von Antennendiagrammen gewechselt und für jedes der Antennendiagramme Folgendes bestimmt wird: (i) der Anteil der Zeit, in dem das Antennendiagramm ausgewählt war, in dem die Kleinzelle aktiv war; und/oder (ii) ein normiertes Verkehrsvolumen im Uplink und/oder im Downlink für jedes der Antennendiagramme;

und wobei das Bestimmen der Mobilität der Teilnehmergeräte durch Bestimmen einer Anzahl kurzzeitiger Sitzungen, in denen ein Zeitintervall zwischen einer eingehenden und einer ausgehenden Handover-Anforderung für ein Teilnehmergerät kürzer als eine vorher bestimmte Zeit ist, für jedes der mindestens einigen der Vielzahl von Antennendiagrammen durchgeführt wird;

und eine Verwertungsphase, die Auswählen eines der Vielzahl von Antennendiagrammen in Abhängigkeit von der mindestens einen gemessenen Angabe einer Kleinzellengüte und Bereitstellen der Kleinzellenfunkbedeckung unter Verwendung der mindestens einen Antenne, die konfiguriert ist, um das ausgewählte Antennendiagramm zu generieren, umfasst, wobei das zellulare Netz eine Makrozellenbasisstation, die eine Funkbedeckung innerhalb einer Makrozelle bereitstellt, umfasst, wobei die Kleinzelle innerhalb der Makrozelle liegt.

2. Verfahren zum Verbessern einer Güte eines zellularen Netzes nach Anspruch 1, wobei die mindestens eine Angabe der Güte der Kleinzelle ferner eine Störungsauswirkung umfasst.

3. Verfahren nach Anspruch 2, wobei die Untersuchungsphase Schätzen der Störungsauswirkung für jedes der mindestens einigen der Vielzahl von Antennendiagrammen durch Folgendes umfasst:

Messen einer detektierten Energie in Uplink-Frequenzen; und/oder

Erhöhen eines Zellenvergrößerungsbias und Bestimmen einer Anzahl zusätzlicher Benutzer, die dies generiert; und/oder

Empfangen von Informationen zu Pilotleistungen aus benachbarten Zellen.

4. Verfahren nach einem vorhergehenden Anspruch, wobei die Untersuchungsphase ferner Messen von mindestens zwei der Angaben der Güte der Kleinzelle und Kombinieren der mindestens zwei Angaben zum Generieren einer Leistungsangabefunktion und Nutzen der Leistungsangabefunktion zum Auswählen eines bevorzugten Antennendiagramms zur Verwendung in der Verwertungsphase umfasst.

5. Verfahren nach einem vorhergehenden Anspruch, wobei die Untersuchungsphase beendet ist, wenn sie eine vorher bestimmte Zeit lang und/oder für eine vorher bestimmte Anzahl von Messungen durchgeführt worden ist, wobei die Verwertungsphase durchgeführt wird, sobald die Untersuchungsphase beendet ist.

**6.** Verfahren nach einem vorhergehenden Anspruch, das während der Verwertungsphase kontinuierliches Messen mindestens einer Angabe einer Güte der Kleinzelle und als Reaktion darauf, dass die Angabe angibt, dass die Güte der Kleinzelle unter ein vorher bestimmtes Niveau gesunken ist, Auswählen eines anderen Antennendiagramms aus den mindestens einigen der Vielzahl von Antennendiagrammen in Abhängigkeit von der gemessenen Kleinzellengüte umfasst.

**7.** Verfahren nach einem vorhergehenden Anspruch, das periodisches Durchführen der Schritte der Untersuchungsphase und Durchführen der Verwertungsphase unter Verwendung der gemessenen Kleinzellengüte aus der letzten Untersuchungsphase umfasst.

**8.** Verfahren nach einem vorhergehenden Anspruch, wobei der Schritt des Messens der Güte der Kleinzelle Zuordnen der Messungen der Kleinzellengüte zu einem Zeitabschnitt, in dem die Messung vorgenommen wurde, umfasst und, wenn eines der Vielzahl von Antennendiagrammen eine verbesserte Kleinzellengüte während eines ersten Zeitabschnitts bereitstellt und ein weiteres Antennendiagramm eine verbesserte Kleinzellengüte während eines zweiten Zeitabschnitts bereitstellt, die Verwertungsphase Auswählen des einen Antennenabschnitts für den ersten Zeitabschnitt und des weiteren Antennenabschnitts für den zweiten Zeitabschnitt umfasst.

**9.** Verfahren nach einem vorhergehenden Anspruch, wobei die mindestens eine Antenne Folgendes umfasst:

eine Mehrelementantenne, wobei unterschiedliche Antennendiagramme dadurch gebildet werden, dass unterschiedliche Elemente der Mehrelementantenne aktiv sind; oder eine Antennengruppe mit einem Netz mit wechselnden Einspeisungen.

**10.** Verfahren nach Anspruch 9, wobei die Antenne eine Mehrelementantenne umfasst und die mindestens einigen der Vielzahl von Antennendiagrammen der Untersuchungsphase Antennendiagramme, die durch jedes der Elemente der Mehrelementantenne, das als Einzelelementantenne fungiert, generiert werden, umfassen.

**11.** Verfahren nach Anspruch 10, wobei die Untersuchungsphase ferner Bestimmen mindestens einer Angabe einer Kleinzellengüte für ein Antennendiagramm, das durch mindestens zwei der mehreren Elemente der Antenne generiert wird, umfasst; wobei der Schritt des Bestimmens der mindestens einen Angabe einer Kleinzellengüte für ein Antennendiagramm, das durch mindestens zwei der mehreren Elemente der Antenne generiert wird, Folgendes umfasst:

Schätzen der mindestens einen Angabe aus der mindestens einen gemessenen Angabe für Antennendiagramme, die durch die mindestens zwei der mehreren Elemente, die als Einzelantennenelemente fungieren, generiert werden; oder Messen der mindestens einen Angabe der Güte der Kleinzelle für die Antennendiagramme, die durch mindestens zwei der mehreren Elemente der Antenne generiert werden.

**12.** Computerprogramm, das, wenn es durch einen Computer ausgeführt wird, dazu dient, den Computer zum Durchführen von Schritten eines Verfahrens nach einem der Ansprüche 1 bis 11 zu steuern.

**13.** Kleinzellenbasisstation (20), die konfiguriert ist, um eine Funkbedeckung innerhalb einer Kleinzelle bereitzustellen, wobei sich die Kleinzelle innerhalb einer zugrundeliegenden Makrozelle befindet, wobei die Kleinzellenbasisstation Folgendes umfasst:

mindestens eine Antenne (30), die dazu dient, eine Funkbedeckung in einem aus einer Vielzahl von Antennendiagrammen bereitzustellen; eine Steuerschaltung (50), die dazu dient, die mindestens eine Antenne während einer Untersuchungsphase zum Generieren mindestens einiger der Vielzahl von Antennendiagrammen eine vorher bestimmte Zeit lang zu steuern; eine Messschaltung (52), die dazu dient, mindestens eine Angabe einer Güte der Kleinzelle für die mindestens einigen der Vielzahl von Antennendiagrammen zu messen, wobei die Angabe der Güte der Kleinzelle Folgendes umfasst: eine Verkehrsumleitung und/oder eine Teilnehmergerätemobilität; und eine Auswahlschaltung (54) zum Auswählen einer der Vielzahl von Antennendiagrammen in Abhängigkeit von der mindestens einen gemessenen Angabe einer Kleinzellengüte; wobei die Kleinzellenbasisstation dazu dient, das ausgewählte Antennendiagramm während einer Verwertungsphase zu generieren; wobei die Messschaltung zu Folgendem dient:

Messen einer Verkehrsumleitung für jedes der mindestens einigen der Vielzahl von Antennendiagrammen, indem periodisch zwischen den mindestens einigen der Vielzahl von Antennendiagrammen gewechselt und für jedes der Antennendiagramme Folgendes bestimmt wird: (i) der Anteil der Zeit, in dem das Antennendiagramm ausgewählt war, in dem die Kleinzelle aktiv war; und/oder (ii) ein normiertes Verkehrsvolumen im Uplink und/oder im Downlink für jedes der Antennendiagramme;

und Bestimmen der Mobilität der Teilnehmergeräte durch Bestimmen einer Anzahl kurzzeitiger Sitzungen, in denen ein Zeitintervall zwischen einer eingehenden und einer ausgehenden Handover-Anforderung für ein Teilnehmergerät kürzer als eine vorher bestimmte Zeit ist, für jedes der mindestens einigen der Vielzahl von Antennendiagrammen.

## Revendications

1. Procédé d'amélioration des performances d'un réseau cellulaire, ledit réseau cellulaire comprenant une station de base de petite cellule (20) fournissant une couverture radio à l'intérieur d'une petite cellule, ladite station de base de petite cellule (20) comprenant au moins une antenne (30) capable de fournir une couverture radio dans un motif d'antenne d'une pluralité de motifs d'antenne, ledit procédé comprenant :

   un stade d'exploration consistant à mesurer au moins une indication des performances de ladite petite cellule pour au moins certains des motifs d'antenne de ladite pluralité de motifs d'antenne, ladite indication desdites performances de ladite petite cellule comprenant au moins un élément parmi : une décharge de trafic et une mobilité d'équipement d'utilisateur ;

   dans lequel la mesure de la décharge de trafic pour chaque motif d'antenne desdits au moins certains des motifs d'antenne de ladite pluralité de motifs d'antenne est effectuée par une commutation périodique entre lesdits au moins certains motifs d'antenne de ladite pluralité de motifs d'antenne et une détermination pour chacun desdits motifs d'antenne d'au moins un élément parmi : (i) la proportion du temps durant lequel ledit motif d'antenne a été sélectionné et pendant lequel la petite cellule a été active ; et (ii) au moins un volume de trafic normalisé de liaison montante et liaison descendante pour chacun desdits motifs d'antenne ;

   et dans lequel la détermination de ladite mobilité d'équipement d'utilisateur est effectuée par la détermination d'un nombre de sessions transitoires, dans lesquelles un temps entre des demandes de transfert entrante et sortante concernant un équipement d'utilisateur est inférieur à une durée prédéterminée, pour chacun desdits au moins certains motifs d'antenne de ladite pluralité de motifs d'antenne ;

et un stade d'exploitation consistant à sélectionner un motif d'antenne de ladite pluralité de motifs d'antenne en fonction de ladite mesure d'au moins une indication des performances de petite cellule et fournir ladite couverture radio de petite cellule au moyen de ladite au moins une antenne configurée pour générer ledit motif d'antenne sélectionné, ledit réseau cellulaire comprenant une station de base de macrocellule fournissant une couverture radio à l'intérieur d'une macrocellule, ladite petite cellule se trouvant à l'intérieur de ladite macrocellule.

2. Procédé d'amélioration des performances d'un réseau cellulaire selon la revendication 1, dans lequel ladite au moins une indication desdites performances de ladite petite cellule comprend également un impact d'interférence.

3. Procédé selon la revendication 2, dans lequel ledit stade d'exploration consiste à estimer ledit impact d'interférence pour chaque motif d'antenne desdits au moins certains des motifs d'antenne de ladite pluralité de motifs d'antenne au moyen d'au moins une des actions consistant à :

   mesurer l'énergie détectée sur des fréquences de liaison montante ;
   augmenter le biais d'extension de cellule et déterminer un nombre d'utilisateurs supplémentaires que cela génère ;
   recevoir des informations sur des puissances pilotes en provenance de cellules voisines.

4. Procédé selon l'une quelconque des revendications précédentes, dans lequel ledit stade d'exploration consiste également à mesurer au moins deux desdites indications desdites performances de ladite petite cellule, à combiner lesdites au moins deux indications pour générer une fonction d'indication de performances et à utiliser ladite fonction d'indication de performances pour sélectionner un motif d'antennes préférentiel destiné à être utilisé dans ledit stade d'exploitation.

5. Procédé selon l'une quelconque des revendications précédentes, dans lequel ledit stade d'exploration est terminé lorsqu'il a été effectué pendant au moins un des éléments suivants : une durée prédéterminée et un nombre de mesures prédéterminé, ledit stade d'exploitation étant effectué lorsque ledit stade d'exploration s'est achevé.

6. Procédé selon l'une quelconque des revendications précédentes, comprenant, durant ledit stade d'exploitation, la mesure continuelle d'au moins une indication de performances de ladite petite cellule et, en réponse au fait que ladite indication indique que lesdites performances de ladite petite cellule ont chuté au-dessous d'un niveau prédéterminé, la sélection d'un motif d'antennes différent parmi lesdits au moins certains des motifs d'antenne de ladite pluralité de motifs d'antenne en fonction desdites performances de petite cellule mesurées.

7. Procédé selon l'une quelconque des revendications précédentes, comprenant l'exécution périodique desdites étapes dudit stade d'exploration et l'exécution dudit stade d'exploitation au moyen desdites mesures de performances de petite cellule provenant dudit stade d'exploration le plus récent.

8. Procédé selon l'une quelconque des revendications précédentes, dans lequel ladite étape de mesure desdites performances de ladite petite cellule consiste à associer lesdites mesures desdites performances de petite cellule à une période de temps au cours de laquelle ladite mesure a été faite, et lorsqu'un motif d'antennes de ladite pluralité de motifs d'antenne offre de meilleures performances de petite cellule au cours d'une première période de temps et qu'un autre motif d'antennes offre de meilleures performances de petite cellule au cours d'une deuxième période de temps, ledit stade d'exploration consiste à sélectionner ladite une période d'antenne pendant ladite première période de temps et ladite autre période d'antenne pendant ladite deuxième période de temps.

9. Procédé selon l'une quelconque des revendications précédentes, dans lequel ladite au moins une antenne comprend un élément parmi :

une antenne à éléments multiples, différents motifs d'antenne étant formés par différents éléments de ladite antenne à éléments multiples qui sont actifs ; et
un réseau d'antennes ayant un réseau d'alimentations commuté.

10. Procédé selon la revendication 9, dans lequel ladite antenne comprend une antenne à éléments multiples et lesdits au moins certains des motifs d'antenne de ladite pluralité de motifs d'antenne dudit stade d'exploration comprennent des motifs d'antenne générés par le fait que chacun desdits éléments de ladite antenne à éléments multiples agisse comme une antenne à élément individuel.

11. Procédé selon la revendication 10, dans lequel ledit stade d'exploration comprend également la détermination d'une indication de performances de petite cellule pour un motif d'antenne généré par au moins deux desdits éléments multiples de ladite antenne ; dans lequel
ladite étape de détermination de ladite au moins une indication de performances de petite cellule pour un motif d'antenne généré par au moins deux desdits éléments multiples de ladite antenne, comprend une des actions suivantes :

estimer ladite au moins une indication à partir de ladite au moins une indication mesurée concernant les motifs d'antenne générés par lesdits au moins deux des éléments multiples agissant comme des éléments d'antenne individuels ; et
mesurer ladite au moins une indication desdites performances de ladite petite cellule pour lesdits motifs d'antenne générés par au moins deux desdits éléments multiples de ladite antenne.

12. Programme informatique qui, lorsqu'il est exécuté par un ordinateur, est capable de commander ledit ordinateur pour lui faire effectuer les étapes d'un procédé selon l'une quelconque des revendications 1 à 11.

13. Station de base de petite cellule (20) configurée pour fournir une couverture radio à l'intérieur d'une petite cellule, ladite petite cellule étant située à l'intérieur d'une macrocellule sous-jacente, ladite station de base de petite cellule comprenant :

au moins une antenne (30) capable de fournir une couverture radio dans un motif d'antenne d'une pluralité de motifs d'antenne ;
des circuits de commande (50) capables de commander ladite au moins une antenne au cours d'un stade d'exploration pour générer au moins certains des motifs d'antenne de ladite pluralité de motifs d'antenne pendant une durée prédéterminée ;
des circuits de mesure (52) capables de mesurer au moins une au moins une indication des performances de ladite petite cellule concernant lesdits au moins certains des motifs d'antenne de ladite pluralité de motifs d'antenne, ladite indication desdites performances de ladite petite cellule comprenant au moins un élément parmi :
une décharge de trafic et une mobilité d'équipement d'utilisateur ; et
des circuits de sélection (54) servant à sélectionner un motif d'antenne de ladite pluralité de motifs d'antenne en fonction de ladite mesure d'au moins une indication des performances de petite cellule ;
ladite station de base de petite cellule étant capable de générer ledit motif d'antenne sélectionné au cours d'un stade d'exploitation ;

les circuits de mesure étant capables de :

mesurer la décharge de trafic pour chaque motif d'antenne desdits au moins certains des motifs d'antenne de ladite pluralité de motifs d'antenne par une commutation périodique entre lesdits au moins certains motifs d'antenne de ladite pluralité de motifs d'antenne et déterminer pour chacun desdits motifs d'antenne au moins un élément parmi : (i) la proportion du temps durant lequel ledit motif d'antenne a été sélectionné et pendant lequel la petite cellule a été active ; et (ii) au moins un volume de trafic normalisé de liaison montante et liaison descendante pour chacun desdits motifs d'antenne ;

et déterminer ladite mobilité d'équipement d'utilisateur en déterminant un nombre de sessions transitoires, dans lesquelles un temps entre des demandes de transfert entrante et sortante concernant un équipement d'utilisateur est inférieur à une durée prédéterminée, pour chacun desdits au moins certains motifs d'antenne de ladite pluralité de motifs d'antenne.

Small Cell BS
Small Cell Coverage
Macrocell User
Small Cell User

Examples of small cell deployment

FIG. 1

Two design schematics for the switched multi-element antenna system

FIG. 2

Example gain pattern of antenna elements

FIG. 3

Pattern #1 | Pattern #2 | Pattern #3 | Pattern #4 | Pattern #1 | Pattern #2 | ...

Call Arrives / Data Session Starts

Call / Data Session Ends

Time ⟶

FIG. 4

FIG. 5

EP 2 943 003 B1

This is
New York City's
population
by day.....

....and the
population
at night

Population

Low    Medium    High

Example of Manhattan population distribution
(left day time and right night time)

FIG. 6

EP 2 943 003 B1

example of fitness function for four antenna patterns

FIG. 7a

averaged fitness values for selected antenna patterns

FIG. 7b

FIG. 8

Select first antenna pattern

Measure indications of performance

Time period expired ? — No

↓ yes

User currently Connected ? — yes

↓ No

Last antenna pattern currently selected? — No

↓ yes

Total number of measurements exceeds predetermined number? — No

Select next antenna pattern

exploration phase

Combine indications of performance to generate performance function

Select antenna pattern with best performance function

Operate small cell base station with selected antenna pattern

exploition phase

FIG. 9

FIG. 10

(a)

(b)

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110009105 A
- US 20110136478 A
- US 20100296401 A
- EP 1748664 A
- GB 2361385 A